# NEW EUROPEAN PATENT SPECIFICATION

(11) **EP 1 108 857 B2**
(45) Date of publication and mention of the opposition decision: **18.12.2013**
(45) Mention of the grant of the patent: 12.04.2006
(21) Application number: 00310766.1
(22) Date of filing: 04.12.2000
(51) Int. Cl.: F01D 11/12

(54) **Abradable seal**
Abreibbare Dichtungsschicht
Joint abradable

(30) Priority: 17.12.1999 US 466117; 17.12.1999 US 466255; 17.12.1999 US 466421
(43) Date of publication of application: 20.06.2001
(73) Proprietor: United Technologies Corporation, Hartford, CT 06101 (US)
(72) Inventor: Dalzell, William John, Jr., Jupiter, FL 33458 (US); Crawford, George Lee, Palm Beach Gardens, FL 33410 (US); Woodard, William J., Kingwood, Texas 77345 (US); Sanders, Stuart Alan, Palm Beach Gardens, FL 33418 (US); Walden, Frederick Clell, Jensen Beach, FL 34957 (US)
(74) Representative: Hoffmann, Benjamin

(56) References cited:
- EP-A- 0 487 273
- US-A- 4 936 745
- US-A- 5 304 032
- US-A- 5 434 210
- US-A- 5 472 315

## Description

The present invention relates generally to air seals for gas turbine engines, and relates more particularly to seals having improved properties in operating conditions during which unusually large amounts of seal material is liberated and ingested into the engine.

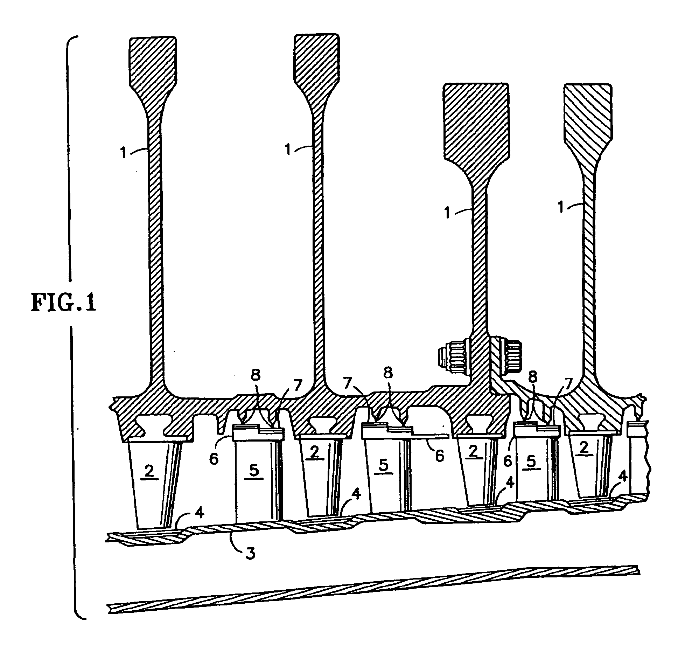

Gas turbine engines are well known sources of power, e.g., motive power for aircraft or as power generators, and generally include compressor (typically preceded by one or more fan stages), combustor and turbine sections. As illustrated generally in FIG. 1, compressor and turbine sections (and any fan stages) each include shaft-mounted, rotating disks 1, each carrying a set of blades 2 located within a hollow housing or case 3, with intervening sets of stationary vanes 5 mounted to the case. Air seals 4, 7 are provided between the tips of the blades and the case (outer air seals), and between the vanes and the disks (knife edge seals) to prevent air leakage between those components.

Air is ingested through an engine inlet and compressed by rotating disks and associated blades in the compressor. The compressed air is then burned with fuel in the combustor to generate high pressure and temperature gasses, which cause rotation of the turbine sections and associated fan compressor stages and are then ejected out an engine exhaust to provide thrust. The case is intended to prevent leakage of air or combustion products around the tips of the blades, i.e., between the blade tips and the case, which leakage reduces the efficiency of the engine.

Despite the design of components to minimize leakage, a substantial proportion of any leakage which does occur in a normally-operating gas turbine engine occurs between the tips of the blades and the case, and between the tips of the vanes and the disks. One manner of eliminating such leakage is to fabricate all mating parts to extremely close tolerances, which becomes increasingly expensive as tolerances are reduced. Moreover, given the temperature ranges to which the parts are subjected to before, during and after operation, and the resultant thermal expansion and contraction of the parts, such close tolerances will at times result in interference between mating parts and corresponding component wear and other damage. Accordingly, gas turbine engine designers have devoted significant effort to developing effective air seals, and particularly seals composed of abradable materials. See, e.g., U.S. Pat. Nos. 4,936,745 to Vine et al. and 5,705,231 to Nissley et al.

Seals require a balance of several properties including relative abradability upon being contacted by a rotating blade tip, erosion resistance, durability, thermal expansion balanced with that of the underlying material, and relative ease and reasonable cost of manufacture. See, e.g., U.S. Pat. No. 5,536,022 to Sileo.

US 5,434,210 describes composite abradable coatings which are fabricated using thermal spray processes. The resulting abradable material comprises a substantially continuous matrix formed of a material selected from metals, metal alloys and ceramics throughout which is dispersed plastic inclusions.

A typical compressor air seal includes the seal substrate, e.g., a metal substrate, an optional metal layer composed of a metal powder plasma sprayed on the substrate, and an abradable, sealing layer applied to the metal layer. Typical sealing layers include a metal matrix of aluminum and silicon with some amount of embedded polyester powder particles and is plasma sprayed onto the substrate, as well as silicone rubber abradable layers incorporating material such as Visilox V-622 from Rhodin of Troy, NY and hollow microspheres. These systems provide adequate performance up to about 260 °C (500 °F). While these seal systems have provided adequate performance to date, there remains a desire for a seal system having a higher temperature capability, compatible thermal expansion with the underlying substrate, improved erosion resistance yet readily abrades when contacted by a blade tip of knife edge, and so on.

Moreover, with the desire to reduce the weight of gas turbine engines, particularly for use with aircraft, the use of composite cases for various engine stages has been proposed. In this instance, the use of plasma spray deposition processes is undesirable if not unusable. Accordingly, another type of seal system must be employed.

It is an object of the present invention to provide a gas turbine engine air seal that provides the desired improved performance over present air seals.

It is another object to provide such a seal that is also cost effective.

It is yet another object to provide a seal that weighs no more than conventional seal material, and provides no weight penalty.

It is still another object to provide a seal that can be readily applied to composite substrates.

It is still yet another object to provide such a seal using conventional equipment.

The present invention relates to a gas turbine engine, seal system according to claim 1.

According to the present invention, an air seal is used in a gas turbine engine. The seal includes a seal substrate, and an abradable seal layer on to the substrate. The abradable layer includes at least a thermoset polymer bulk material such as a phenolic powder and a thermoplastic binder material such as PEEK. The abradable layer may also include a filler to provide some desired characteristic, such as porosity or dry lubrication to enhance abradability.

According to another aspect of the invention, a method is disclosed for forming an air seal for use in a gas turbine engine having improved durability. The method includes providing a seal substrate; and plasma spraying an abradable seal layer on to the substrate. The abradable layer includes a thermoset polymer bulk material and a thermoplastic binder material.

According to still another aspect of the invention, a method is disclosed for forming an air seal for use in a gas turbine engine having improved durability. The method includes providing a seal substrate; and molding an abradable layer comprising of thermoset polymer and thermoplastic material; removing the molded seal material; and bonding the molded seal material to the seal substrate.

One advantage of the present invention is that the seal provides improved durability and abradability, particularly at higher temperatures. In addition, seal of the present invention is cost effective to produce, and does not weigh any more than conventional seal materials.

Some preferred embodiments of the invention will now be described with reference to the accompanying drawings in which:
FIG. 1 is a cross sectional view of a portion of a typical gas turbine engine.
FIG. 2 is a schematic view of a plasma torch for producing the seal in accordance with the present invention.
FIGS. 3a and 3b are photomicrographs of anabradable material in accordance with the present invention.

According to one embodiment of the invention, the seal is plasma sprayed onto a seal substrate. While the seal substrate is typically a metal, such as a titanium alloy or a superalloy material, the present invention may also be applied to composite seal substrates. The seal material includes a thermoset polymer as a primary or bulk phase and a thermoplastic polymer as a secondary or binder phase. Preferably, the primary or bulk phase is composed of a material that is stable to a temperature of at least 260 °C (500° F), and the secondary or binder phase has a melting temperature in excess of 315°C (600° F). Optional additions or fillers include porosity additions, for example via hollow spheres (glass or carbon materials) dry lubricants such as MoSi2, PTFE or graphite. Representative compositions in volume percent are 40 - 80 % for the bulk phase, 20 - 60% for the binder phase, and 0 - 30% of the filler.

The thermoset material is typically durable, but typically has an upper temperature limit when used in bulk, for example less than about 175 or 205 °C (350° F or 400° F) during application processes and thus it is not possible to heat the thermoset material sufficiently to apply by plasma spray. Accordingly, thermoset materials have not previously been incorporated into plasma sprayed abradable coatings. When plasma sprayed in accordance with the present invention, care is taken to ensure that the thermoset material is not heated too much, since the thermoset material will burn; however, if too low a temperature is used the material will not soften sufficiently to build up on the substrate. The thermoplastic material is also selected to provide the seal with sufficient higher temperature stability, e.g., up to and in excess of 260 °C (500° F) depending upon the anticipated service temperature(s) of the seal. The filler material provides porosity or lubrication to enhance abradability or some other desired characteristic.

Exemplary thermoset materials include Fina met phenolic powder (from Mark V Laboratories of East Granby, CT), with higher temperature applications including materials such as polyimides (Vespel® SP21 from DuPont of Wilmington, DE), fluorinated polyimides (Avimid®N from Cytec of Havre de Grace, MD), and polybenzimidazoles (Celazole® U-60 from Celanese Ltd. Of Dallas, TX). Other thermoset materials can also be used.

Exemplary thermoplastic materials includes polyarylether (e.g., PEK [polyetherketone], PEKK [polyetherketoneketone], Ultrapek™ [e.g., polyaryletherketone available from BASF] or PEEK™ [polyetheretherketone], from Victrex USA of York, PA), polyetherimide (Ultem® PEI from GE Polymerland of Huntersville, NC) and polyamideimide (e.g., Torlon® from BP Amoco Chemicals of Greenville, SC).

Exemplary hollow spheres include glass microspheres (Q-Cell 2135 from PQ Corporation of Philadelphia, PA) and carbon microspheres (Carbosphere Type D from Carbospheres, Inc. of Fredericksburg, VA).

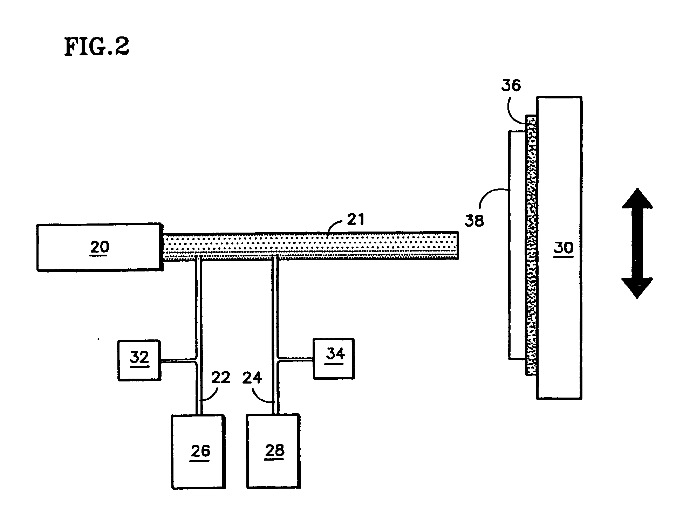

Turning now to FIG. 2, a plasma spray apparatus includes a torch 20 (including a power source and spray head, neither shown separately from the apparatus generally), and at least two powder delivery lines 22, 24. The torch preferably is capable of simultaneously delivering and spraying at least two separate powders into a flame 21, see, e.g., commonly-owned U.S. Pat. No,. 4,696,855 to Pettit, Jr. et al, for further detail. The lines 22, 24 are coupled respectively to powder material hoppers 26, 28 which contain the powder to be deposited onto a substrate 30, and respective sources 32, 34 of carrier gas such as argon, which deliver the powder from the hoppers into the plasma torch plume. Typical substrate materials include titanium alloys, as well as nickel base, cobalt base and iron base superalloys and combination of these materials, although the present invention may also be used with composite substrate materials, and is not intended to be limited to such materials. The seal may include a bond layer 36 (illustrated in FIG. 2 but preferably does not include such a layer. The layer 36 might be used, for example, in connection with a metal substrate to grade from the metal to a composition similar to that of theabradable layer to be applied to the substrate. Plasma spray apparatus generally are known in the art, and accordingly have not been described in detail herein. We have used a model 7MB3 manufactured by Sulzer-Metco to produce seals in accordance with the present invention. While present invention is described in connection with an outer air seal, it may be equally applied to a knife edge seal (e.g., FIG. 1 at 7, 8), or other suitable application.

The powder material which forms an abradable layer 38 is preferably co-deposited, e.g., introduced separately into the plasma, but we have also used blended powder. Co-depositing enables the relative amounts of bulk, binder and filler to be adjusted as desired. Preferably a combination of argon and hydrogen is used as the arc gas.

The bulk phase powder is stored in a hopper 26, and a carrier gas such as argon or nitrogen is provided from a source such as the source 32, to carry the powder through a line such as line 22, to introduce the powder to the torch 20. The binder phase powder is stored in a hopper 28, and a carrier gas such as argon or nitrogen is provided from a source such as the source 34, to carry the powder through a line such as line 24, to introduce the powder into the spray stream produced by the torch 20 downstream of the bulk powder. The bulk and binder phases are deposited on the substrate to form the abradable layer 38 to a desired thickness (preferably uniform) plus some excess thickness (typically at least 0.64 mm [0.025 inch]) to allow for subsequent machining of the seal.

An optional, additional step is to include filler (or some other material such as lubricant (into) the abradable layer 38, to produce a seal having porosity.

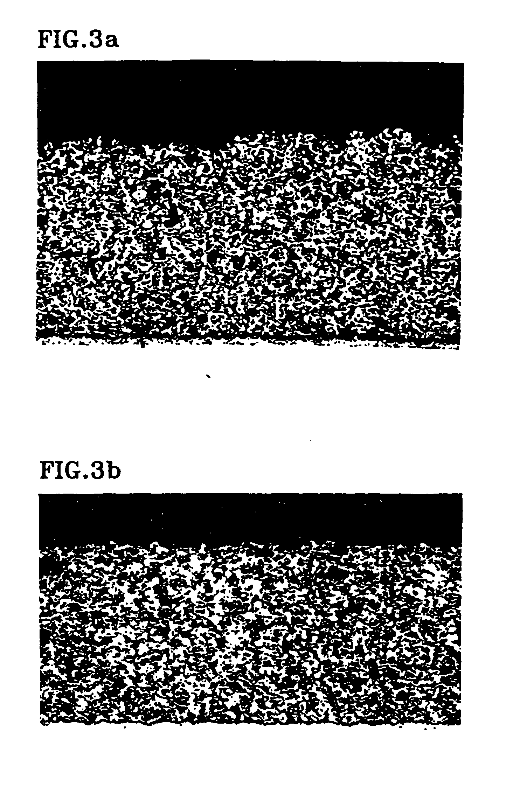

As an example, several trials were run using aSulter Metco 7MB3 plasma spray torch with GP electrode assembly, at 500 amps and 60 - 70 volts, with a primary gas of argon at a flow rate of about 87 standard liters/minute (SLPM), a secondary gas of hydrogen at a flow rate of about 2 - 3 SLPM, and a gun to workpiece distance of about 1.4 cm [3.5 inches]. For pure polymer abradables (no hollow spheres), we have varied mixtures which resulted in ratios of PEEK/Phenolic between about 60:40 and 90:10. While each of the samples was deemed acceptable, different application might require different compositions. Rub rig test results indicated that the higher % PEEK samples were acceptable, but increased blade loading. Exemplary microstructures of plasma sprayed materials are illustrated in FIGS. 3a and 3b, with FIG. 3a showing a lower density seal material and FIG. 3b showing a higher density seal material.

In an alternative embodiment, the present invention may be molded separately, and then bonded to the seal substrate. The powders, including filler(s) as desired are blended and inserted into a die cavity generally defining the shape of the abradable layer. The mold and blended powder are heated and the dies are brought together to form the abradable layer. The temperature and pressure are selected to soften but not burn or damage the polymer materials. Alternatively, the powders may be plasma sprayed, as above, into a mold to build up the seal in the mold, with the mold having been treated with a release agent such as salt, e.g., sodium chloride, or boron nitride to facilitate seal removal. In the case of salt, concentrated formula is mixed and applied to a substrate. A very rough pure SALT surface is obtained on the mold surface, and plasma spray coatings tend to adhere very well to the salt. The coating is applied and built up, e.g., by plasma spraying. The seal and mold are then submerged in moving water - which dissolves the SALT and releases the molded seal.

Several samples were prepared by placing the above PEEK and Fina-met phenolic powders and hollow spheres in molds and heating the molds and powder to about 357°C (675 °F) and consolidating the powder at about 0.69 MPa [100 psi] for 15 minutes.

| Sample | PEEK | Phenolic | Glass spheres | Carbon spheres |
|---|---|---|---|---|
| 1 | 30 | 70 | -- | -- |
| 2 | 24 | 56 | 20 | -- |
| 3 | 40 | 40 | 20 | -- |
| 4 | 29 | 66 | 5 | -- |
| 5 | 40 | 40 | -- | 20 |

Alternatively, the seals may be molded in an autoclave, or molded on the seal substrate in situ using pressure rollers. If needed, a heat source such as an external heater or plasma torch is provided.

The molded abradable layer is then removed from the molds and is preferably adhesively bonded to the seal substrate using such exemplary adhesives as epoxies (FM300 from Cytec of Havre de Grace, MD), nitrile-phenolic (AF 30 from 3M Aerospace Materials of St. Paul, MN), and silicones (RTV159 from GE Silicones of Waterford, NY). The adhesive is selected to be appropriate for the service temperature of the intended seal system, and such that curing temperatures and/or pressures do not compromise the integrity of the molded abradable seal. Surface preparation of the seal substrate for bonding is accomplished by one or more methods including abrasive roughening (hand-sanding, grit-blasting) followed by cleaning with non-contaminating low-residue solvent (acetone, ethyl or isopropyl alcohol). Bonding may be enhanced by the employment of various electrochemical etching procedures (chromic or phosphoric acid), which procedures are typically considered to follow industry standards.

Testing of the present invention using the samples described above, as plasma sprayed and also as molded and adhesively bonded to a seal substrate has been favorable. Both versions of the inventive seal exhibit erosion resistance at least as good as conventional metallic abradable seals composed of aluminum and silicon with polyester. The seals also exhibit abradability at least as good at conventional, porous silicone rubber seal seals.

An advantage of the present invention is that the seal provides both acceptable durability and abradability, and also provides these features at higher temperatures. In addition, seal of the present invention is cost effective, and does not weigh any more than conventional seal materials. The seal of the present invention can be applied using conventional plasma spray apparatus, and the process of providing such a seal that enables adjustment of the proportion of metal and of filler, to provide an optimal seal adapted for different operating conditions. Alternatively, the inventive seal can be applied by molding the seal and then bonding the seal to a substrate, or by molding the seal in situ.

## Claims

1. A gas turbine engine seal system comprising:
an air seal comprising:
a seal substrate; and
an abradable seal layer on the substrate, the abradable layer comprising a bulk material and a thermoplastic binder material;
**characterised in that** the bulk material is a thermoset polymer bulk material;
and
an engine component adapted for motion relative to the air seal and having an abrasive portion interacting with the abradable seal layer, the abrasive portion of the component and the abradable layer of the seal assembly cooperating to provide sealing.

2. A gas turbine engine seal system as in claim 1, wherein the abradable layer comprises a volume percent between about 40 - 80% of the thermoset material and about 20 - 60% of the thermoplastic material.

3. A gas turbine engine seal system as in claim 1 or 2, wherein the abradable layer has a microstructure **characterised by** splats built up on one another.

4. A gas turbine engine seal system as in any one of claims 1 to 3, wherein the abradable layer further comprises up to about 30% by volume filler material.

5. A gas turbine engine seal system as in claim 4, wherein the filler material provides porosity.

6. A gas turbine engine seal system as in claim 4 or 5, wherein the filler comprises hollow spheres having a melting point above the intended service temperature of the seal.

7. A gas turbine engine seal system as in any one of claims 4 to 6, wherein the filler material provides lubrication.

8. A gas turbine engine seal system as in any one of claims 1 to 7, wherein the air seal is an outer air seal.

9. A gas turbine engine seal system as in any one of claims 1 to 7, wherein the air seal is a knife edge seal,

10. A gas turbine engine seal system as in any one of claims 1 to 9, wherein the air seal has a bond layer.

11. A gas turbine engine seal system as in any one of claims 1 to 10, wherein the thermoset polymer bulk material is phenolic powder, a polyimide, a polymidazole, a fluorinated polyimide or a polybenzimidazole.

12. A gas turbine engine seal system as in any one of claims 1 to 11, wherein the thermoplastic material is a polyarylether, a polyetherimide or a polyamideimide.

13. A gas turbine engine seal system as in claim 12, wherein the thermoplastic material is PEEK, PEK, PEKK or Ultrapek™.

14. A gas turbine engine seal system as in any one of claims I to 13, wherein the thermoset material is stable up to at least 260°C (500°F).

15. A gas turbine engine seal system as in any one of claims 1 to 14, wherein the thermoplastic material has a melting temperature above about 315°C (600°F).

16. A method of forming a gas turbine engine seal system in any one of claims 1 to 15, comprising:
providing the seal substrate (30);
applying the abradable seal layer (38) on to the substrate, including codepositing the thermoset polymer bulk material and the thermoplastic binder material; and
providing the engine component adapted for motion relative to the air seal.

17. A method of claim 16, wherein the step of applying is performed by plasma spraying the thermoplastic material and the thermoset material onto the seal substrate.

18. A method of claim 16, wherein the step of applying is performed by thermal spraying the thermoplastic material and the thermoset material onto the substrate.

19. A method of forming a gas turbine engine seal system as in any one of claims 1 to 15, comprising:
providing the seal substrate; and
molding the abradable layer composed of thermoset polymer and thermoplastic material;
removing the molded abradable material from the mold;
bonding the molded seal material to the seal substrate; and
providing the engine component adapted for motion relative to the air seal.

20. A method of forming a gas turbine engine seal system as in any of claims 1 to 15, comprising:
providing the seal substrate; and
molding the abradable layer composed of thermoset polymer and thermoplastic material in situ;
removing the mold; and
providing the engine component adapted for motion relative to the air seal.

21. A method of either claim 19 or 20, wherein the step of molding comprises the steps of:
inserting the powders in a mold;
heating the mold; and
compressing the powder in the mold under pressure.

22. A method of either claim 19 or 20, wherein the step of molding includes plasma spraying the powders into a mold to build up the abradable layer.

23. A method of any one of claims 19 to 22, further comprising the step of applying a mold release to the mold.

24. A method of claim 23, wherein the mold release comprises boron nitride or a salt.

## Patentansprüche

1. Gasturbinenmaschinen-Dichtungssystem aufweisend:
eine Luftdichtung aufweisend:
ein Dichtungssubstrat; und
eine abreibbare Dichtungsschicht auf dem Substrat, wobei die abreibbare Schicht ein Bulkmaterial und ein thermoplastisches Bindemittelmaterial aufweist;
**dadurch gekennzeichnet, dass** das Bulkmaterial ein wärmehärtbares Polymer-Bulkmaterial ist; und
ein Maschinen-Bauteil, das für eine Bewegung relativ zu der Luftdichtung geeignet ist und einen Schleifbereich hat, der mit der abreibbaren Dichtungsschicht wechselwirkt, wobei der Schleifbereich des Bauteils und die abreibbare Schicht der Dichtungsanordnung zusammenwirken, um für eine Abdichtung zu sorgen.

2. Gasturbinenmaschinen-Dichtungssystem nach Anspruch 1, bei der die abreibbare Schicht einen Volumenprozentsatz zwischen etwa 40 bis 80% des wärmehärtbaren Materials und etwa 20 bis 60% des thermoplastischen Materials aufweist.

3. Gasturbinenmaschinen-Dichtungssystem nach Anspruch 1 oder 2, bei der die abreibbare Schicht eine Mikrostruktur hat, die durch aufeinander aufgebaute Spritzer gekennzeichnet ist.

4. Gasturbinenmaschinen-Dichtungssystem nach einem der Ansprüche 1 bis 3, bei der die abreibbare Schicht außerdem bis zu etwa 30 Vol.-% Füllstoffmaterial aufweist.

5. Gasturbinenmaschinen-Dichtungssystem nach Anspruch 4, bei der das Füllstoffmaterial Porosität schafft.

6. Gasturbinenmaschinen-Dichtungssystem nach Anspruch 4 oder 5, bei der der Füllstoff Hohlkugeln mit einem Schmelzpunkt oberhalb der geplanten Gebrauchstemperatur der Dichtung aufweist.

7. Gasturbinenmaschinen-Dichtungssystem nach einem der Ansprüche 4 bis 6, bei der das Füllstoffmaterial für Schmierung sorgt.

8. Gasturbinenmaschinen-Dichtungssystem nach einem der Ansprüche 1 bis 7, bei der die Luftdichtung eine äußere Luftdichtung ist.

9. Gasturbinenmaschinen-Dichtungssystem nach einem der Ansprüche 1 bis 7, bei der die Luftdichtung eine Schneidendichtung ist.

10. Gasturbinenmaschinen-Dichtungssystem nach einem der Ansprüche 1 bis 9, bei der die Luftdichtung eine Bindungsschicht hat.

11. Gasturbinenmaschinen-Dichtungssystem nach einem der Ansprüche 1 bis 10, bei der das wärmehärtbare Polymer-Bulkmaterial phenolisches Pulver, ein Polyimid, ein Polyimidazol, ein fluoriertes Polyimid oder ein Polybenzimidazol ist.

12. Gasturbinenmaschinen-Dichtungssystem nach einem der Ansprüche 1 bis 11, bei der das thermoplastische Material ein Polyarylether, ein Polyetherimid oder ein Polyamidimid ist.

13. Gasturbinenmaschinen-Dichtungssystem nach Anspruch 12, bei der das thermoplastische Material PEEK, PEK, PEKK oder Ultrapek™ ist.

14. Gasturbinenmaschinen-Dichtungssystem nach einem der Ansprüche 1 bis 13, bei der das wärmehärtbare Material bis zu mindestens 260°C (500°F) stabil ist.

15. Gasturbinenmaschinen-Dichtungssystem nach einem der Ansprüche 1 bis 14, bei der das thermoplastische Material eine Schmelztemperatur über etwa 315°C (600°F) hat.

16. Verfahren zur Herstellung eines Gasturbinenmaschinen-Dichtungssystems nach einem der Ansprüche 1 bis 15, aufweisend:
Bereitstellen des Dichtungssubstrats (30);
Aufbringen der abreibbaren Dichtungsschicht (38) auf das Substrat, mit gemeinsamer Abscheidung des wärmehärtbaren Polymer-Bulkmaterials und des thermoplastischen Bindemittelmaterials; und
Bereitstellen des Maschinenbauteils, das für eine Bewegung relativ zu der Luftdichtung geeignet ist.

17. Verfahren nach Anspruch 16, bei dem der Schritt des Aufbringens durch Plasmaspritzen des thermoplastischen Materials und des wärmehärtbaren Materials auf das Dichtungssubstrat durchgeführt wird.

18. Verfahren nach Anspruch 16, bei dem der Schritt des Aufbringens durch thermisches Spritzen des thermoplastischen Materials und des wärmehärtbaren Materials auf das Substrat durchgeführt wird.

19. Verfahren zur Herstellung eines Gasturbinenmaschinen-Dichtungssystems nach einem der Ansprüche 1 bis 15, aufweisend:
Bereitstellen des Dichtungssubstrats; und
Formen der abreibbaren Schicht, die aus wärmehärtbarem Polymer und thermoplastischem Material besteht;
Entfernen des geformten abreibbaren Materials aus der Form;
Verbinden des geformten Dichtungsmaterials mit dem Dichtungssubstrat; und
Bereitstellen des Maschinenbauteils, das für eine Bewegung relativ zu der Luftdichtung geeignet ist.

20. Verfahren zur Herstellung eines Gasturbinenmaschinen-Dichtungssystems nach einem der Ansprüche 1 bis 15, aufweisend:
Bereitstellen des Dichtungssubstrats; und
Formen der abreibbaren Schicht, die aus wärmehärtbarem Polymer und thermoplastischem Material besteht, in situ;
Entfernen der Form; und
Bereitstellen des Maschinenbauteils, das für eine Bewegung relativ zu der Luftdichtung geeignet ist.

21. Verfahren nach Anspruch 19 oder 20, bei dem der Schritt des Formens folgende Schritte aufweist:
Einbringen des Pulvers in eine Form;
Erwärmen der Form; und
Komprimieren des Pulvers in der Form unter Druck.

22. Verfahren nach Anspruch 19 oder 20, bei dem der Schritt des Formens ein Plasmaspritzen des Pulvers in eine Form zum Aufbauen der abreibbaren Schicht aufweist.

23. Verfahren nach einem der Ansprüche 19 bis 22, außerdem aufweisend den Schritt des Anwendens eines Entformungsmittels auf die Form.

24. Verfahren nach Anspruch 23, bei dem das Entformungsmittel Bornitrid oder ein Salz aufweist.

## Revendications

1. Système de joint d'étanchéité de moteur à turbine à gaz comprenant :
un joint d'étanchéité à l'air comprenant :
un substrat de joint ; et
une couche de joint abradable sur le substrat, la couche abradable comprenant un matériau de base et un matériau liant thermoplastique ;
**caractérisé en ce que** le matériau de base est un matériau de base formé d'un polymère thermodurcissable ; et
un composant de moteur adapté pour un déplacement par rapport au joint d'étanchéité à l'air et ayant une partie abrasive qui interagit avec la couche de joint abradable, la partie abrasive du composant et la couche abradable de l'ensemble de joint coopérant pour fournir une étanchéification.

2. Système de joint d'étanchéité de moteur à turbine à gaz selon la revendication 1, dans lequel la couche abradable comprend un pourcentage en volume entre environ 40 et 80 % du matériau thermodurcissable et entre environ 20 et 60 % du matériau thermoplastique.

3. Système de joint d'étanchéité de moteur à turbine à gaz selon la revendication 1 ou 2, dans lequel la couche abradable a une microstructure **caractérisée par** des gouttelettes écrasées construites les unes sur les autres.

4. Système de joint d'étanchéité de moteur à turbine à gaz selon l'une quelconque des revendications 1 à 3, dans lequel la couche abradable comprend en outre jusqu'à environ 30 % en volume d'un matériau de charge.

5. Système de joint d'étanchéité de moteur à turbine à gaz selon la revendication 4, dans lequel le matériau de charge fournit une porosité.

6. Système de joint d'étanchéité de moteur à turbine à gaz selon la revendication 4 ou 5, dans lequel la charge comprend des sphères creuses ayant un point de fusion supérieur à la température de service voulue du joint.

7. Système de joint d'étanchéité de moteur à turbine à gaz selon l'une quelconque des revendications 4 à 6, dans lequel le matériau de charge fournit une lubrification.

8. Système de joint d'étanchéité de moteur à turbine à gaz selon l'une quelconque des revendications 1 à 7, dans lequel le joint d'étanchéité à l'air est un joint d'étanchéité à l'air externe.

9. Système de joint d'étanchéité de moteur à turbine à gaz selon l'une quelconque des revendications 1 à 7, dans lequel le joint d'étanchéité à l'air est un joint à couteau.

10. Système de joint d'étanchéité de moteur à turbine à gaz selon l'une quelconque des revendications 1 à 9, dans lequel le joint d'étanchéité à l'air a une couche de liaison.

11. Système de joint d'étanchéité de moteur à turbine à gaz selon l'une quelconque des revendications 1 à 10, dans lequel le matériau de base formé d'un polymère thermodurcissable est une poudre phénolique, un polyimide, un polyimidazole, un polyimide fluoré, ou un polybenzimidazole.

12. Système de joint d'étanchéité de moteur à turbine à gaz selon l'une quelconque des revendications 1 à 11, dans lequel le matériau thermoplastique est un polyaryléther, un polyéthérimide ou un polyamideimide.

13. Système de joint d'étanchéité de moteur à turbine à gaz selon la revendication 12, dans lequel le matériau thermoplastique est PEEK, PEK, PEKK ou Ultrapek™.

14. Système de joint d'étanchéité de moteur à turbine à gaz selon l'une quelconque des revendications 1 à 13, dans lequel le matériau thermodurcissable est stable jusqu'à au moins 260 °C (500 °F).

15. Système de joint d'étanchéité de moteur à turbine à gaz selon l'une quelconque des revendications 1 à 14, dans lequel le matériau thermoplastique a une température de fusion supérieure à environ 315 °C (600 °F).

16. Procédé de formation d'un système de joint d'étanchéité de moteur à turbine à gaz selon l'une quelconque des revendications 1 à 15, comprenant :
l'apport du substrat de joint (30) ;
l'application de la couche de joint abradable (38) sur le substrat, comprenant le co-dépôt du matériau de base formé d'un polymère thermodurcissable et du matériau liant thermoplastique ; et
l'apport du composant de moteur adapté pour un déplacement par rapport au joint d'étanchéité à l'air.

17. Procédé selon la revendication 16, dans lequel l'étape d'application est effectuée par projection au plasma du matériau thermoplastique et du matériau thermodurcissable sur le substrat de joint.

18. Procédé selon la revendication 16, dans lequel l'étape d'application est effectuée par pulvérisation thermique du matériau thermoplastique et du matériau thermodurcissable sur le substrat.

19. Procédé de formation d'un système de joint d'étanchéité de moteur à turbine à gaz selon l'une quelconque des revendications 1 à 15, comprenant
l'apport du substrat de joint; et
le moulage de la couche abradable composée d'un polymère thermodurcissable et d'un matériau thermoplastique ;
le retrait du matériau abradable moulé du moule ; la liaison du matériau de joint moulé au substrat de joint ; et
l'apport du composant de moteur adapté pour un déplacement par rapport au joint d'étanchéité à l'air.

20. Procédé de formation d'un système de joint d'étanchéité de moteur à turbine à gaz selon l'une quelconque des revendications 1 à 15, comprenant :
l'apport du substrat de joint ; et
le moulage de la couche abradable composée d'un polymère thermodurcissable et d'un matériau thermoplastique in situ ;
le retrait du moule ; et
l'apport du composant de moteur adapté pour un déplacement par rapport au joint d'étanchéité à l'air.

21. Procédé selon la revendication 19 ou 20, dans lequel l'étape de moulage comprend les étapes consistant à :
insérer les poudres dans un moule ;
chauffer le moule ; et
comprimer la poudre dans le moule sous pression.

22. Procédé selon la revendication 19 ou 20, dans lequel l'étape de moulage comprend une projection au plasma des poudres dans un moule pour construire la couche abradable.

23. Procédé selon l'une quelconque des revendications 19 à 22, comprenant en outre l'étape consistant à appliquer un lubrifiant de moule au moule.

24. Procédé selon la revendication 23, dans lequel le lubrifiant de moule comprend du nitrure de bore ou un sel.
